# EUROPÄISCHE PATENTSCHRIFT

(11) **EP 3 699 515 B1**
(45) Veröffentlichungstag und Bekanntmachung des Hinweises auf die Patenterteilung: **11.01.2023**
(21) Anmeldenummer: 19158190.9
(22) Anmeldetag: 20.02.2019
(51) Int. Cl.: F25B 9/08, G01N 17/00, F25B 7/00, F25B 40/02, F25B 41/20, F25B 41/24

(54) **TEMPERIERKAMMER UND VERFAHREN**
TEMPERATURE-CONTROLLED CHAMBER AND METHOD
CHAMBRE DE MISE EN TEMPÉRATURE ET PROCÉDÉ

(43) Veröffentlichungstag der Anmeldung: 26.08.2020
(73) Patentinhaber: Weiss Technik GmbH, 35447 Reiskirchen (DE)
(72) Erfinder: HAACK, Christian, 35037 Marburg (DE); REUSCHEL, Dennis, 35396 Gießen (DE); STROH, Björn, 35329 Gemünden (DE); ZAHRT, Yannik, 35466 Rabenau (DE); BLAUFELDER, David, 35394 Gießen (DE)
(74) Vertreter: advotec.

(56) Entgegenhaltungen:
- EP-A1- 0 780 254
- EP-A2- 0 344 397
- DE-A1-102006 014 867
- US-A1- 2012 023 979
- US-A1- 2012 180 510
- LI CUI ET AL: "Experimental study on a multi-evaporator refrigeration system with variable area ratio ejector", APPLIED THERMAL ENGINEERING, PERGAMON, OXFORD, GB, Bd. 102, 2. April 2016 (2016-04-02), Seiten 196-203, XP029599677, ISSN: 1359-4311, DOI: 10.1016/J.APPLTHERMALENG.2016.04.006

## Beschreibung

Die Erfindung betrifft eine Temperierkammer und ein Verfahren zur Konditionierung von Luft, insbesondere Prüfkammer oder dergleichen, umfassend einen gegenüber einer Umgebung verschließbaren und temperaturisolierten Raum zur Aufnahme von Prüfgut, und eine Temperiervorrichtung zur Temperierung des Raums, wobei mittels der Temperiervorrichtung eine Temperatur in einem Temperaturbereich von -50 °C bis +180 °C innerhalb des Raums ausbildbar ist, wobei die Temperiervorrichtung eine Kühleinrichtung mit einem Kühlkreislauf mit einem Kältemittel, einem Wärmeübertrager, einem Verdichter, einem Kondensator und einem Expansionsorgan aufweist, wobei an einer Hochdruckseite des Kühlkreislaufs in der Strömungsrichtung nachfolgend dem Verdichter ein erster Bypass angeschlossen ist.

Derartige Temperierkammern bzw. Prüfkammern und Verfahren werden regelmäßig zur Überprüfung von physikalischen und/oder chemischen Eigenschaften von Gegenständen, insbesondere Temperierkammern eingesetzt. So sind Temperaturprüfschränke oder Klimaprüfschränke bekannt, innerhalb derer Temperaturen in einem Bereich von -50 °C bis + 180 °C eingestellt werden können. Bei Klimaprüfschränken können ergänzend gewünschte Klimabedingungen eingestellt werden, denen dann die Temperierkammer beziehungsweise das Prüfgut über einen definierten Zeitraum ausgesetzt wird. Derartige Prüfkammern sind regelmäßig beziehungsweise teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Raums bzw. Prüfraums erfolgt regelmäßig in einem Umluftkanal innerhalb des Raums. Der Umluftkanal bildet einen Luftbehandlungsraum im Raum aus, in dem Wärmetauscher zur Erwärmung oder Kühlung der den Umluftkanal beziehungsweise den Raum durchströmenden Luft angeordnet sind. Dabei saugt ein Lüfter beziehungsweise ein Ventilator die im Raum befindliche Luft an und leitet sie im Umluftkanal zu den jeweiligen Wärmetauschern oder umgekehrt. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wiederholt wechseln. Eine derartige Prüfkammer ist beispielsweise aus der EP 0 344 397 A2, mit den Merkmalen des Oberbegriffs des Anspruchs 1, oder EP 3 315 940 A1 bekannt.

Aufgrund der hohen Anforderungen an eine Temperaturregelung innerhalb des Temperaturbereichs des Raums kommt es während eines Betriebs der Prüfkammer regelmäßig zu Schwankungen in einer Lastanforderung. Eine vom Verdichter und Expansionsorgan erzeugte Kälteleistung muss daher stufenlos regelbar sein. Gleichwohl ist es wünschenswert, dass der Verdichter, wenn es sich um einen beispielsweise Kompressor handelt, nicht allzu häufig ein- und ausgeschaltet wird, um eine Lebensdauer des Verdichters zu verlängern. Diese Anforderung wird regelmäßig dadurch gelöst, dass zwischen einer Hochdruckseite und einer Niederdruckseite des Kühlkreislaufs ein Bypass mit einem regelbaren Expansionsorgan ausgebildet ist, über den dann Kälteleistung am Wärmeübertrager vorbei rückgeführt werden kann. Bei dieser bedarfsgerechten Verteilung eines vom Verdichter bewirkten Massenstroms im Kühlkreislauf können an dem Wärmeübertrager auch geringe Temperaturdifferenzen zwischen einer Ist-Temperatur und einer Soll-Temperatur ausgeglichen werden, ohne dass es zu ungünstigen Lastfällen an dem Verdichter kommt. Nachteilig ist hier jedoch, dass eine Leistungsfähigkeit des Verdichters dennoch nicht optimal ausgenutzt wird.

Wesentlich für die Leistungsfähigkeit des Verdichters ist ein Druckverhältnis zwischen einer Hochdruckseite und einer Niederdruckseite des Kühlkreislaufs, das heißt ein Verhältnis der jeweiligen Drücke in Strömungsrichtung vor oder nach dem Verdichter. Da bei Kühleinrichtungen eine Verdampfungstemperatur des Kältemittels am Expansionsorgan bzw. Wärmeübertrager von einem Saugdruck des Verdichters abhängig ist, kann der Saugdruck der Niederdruckseite nicht beliebig angehoben werden, da dann besonders tiefe Temperaturen nicht mehr erreicht werden können. Bei einem niedrigen Saugdruck, und damit einem großen Druckunterschied zwischen der Hochdruck- und der Niederdruckseite ist jedoch die Effizienz und Leistungsfähigkeit des Verdichters vermindert. Ein optimaler Arbeitspunkt des Verdichters liegt regelmäßig dann vor, wenn das Druckverhältnis und damit der Druckunterschied zwischen Hochdruckseite und Niederdruckseite gering ist. Zur Erreichung niedriger Temperaturen ist es daher gegebenenfalls auch erforderlich einen größer dimensionierten Verdichter auszuwählen. Ein größerer oder nicht optimal betriebener Verdichter erfordert jedoch einen höheren Energieeinsatz zum Betrieb der Kühleinrichtung.

Die EP 0 780254A1 offenbart einen Kühlkreislauf einer Klimaanlage eines Kraftfahrzeugs. In dem Kühlkreislauf ist ein Strahlapparat in Strömungsrichtung angeordnet. Am Strahlapparat ist ein Bypass an einer Hochdruckseite angeschlossen. Im Wesentlichen dient der Strahlapparat zum Heizen eines Innenraums des Kraftfahrzeugs über einen Wärmetauscher. Der Strahlapparat kommt immer dann zum Einsatz, wenn über ein Dreiwegeventil ein Heizbetrieb aktiviert ist. Während eines Kühlbetriebs ist hingegen eine Überbrückung des Strahlapparates mit einem Bypass vorgesehen.

Die DE 10 2006 014 867 zeigt einen Kühlkreislauf einer Klimaanlage mit einem Kompressor, einem Kondensator und einen Strahlapparat. Der Strahlapparat ist nachfolgend einem Wärmetauscher und in Strömungsrichtung vor dem Kompressor bzw. Verdichter in dem Kühlkreislauf angeschlossen, wobei ein Bypass von einer Hochdruckseite zu einer Niederdruckseite zur Zuführung von Kältemittel als Treibmedium an den Strahlapparat angeschlossen ist. Weiter ist nachfolgend dem Strahlapparat und noch vor dem Verdichter ein Wärmetauscher in dem Kühlkreislauf angeordnet. Dieser Wärmetauscher dient zum Verdampfen eines Kältemittels aus dem Strahlapparat, und damit zur Kühlung.

Einen weiteren Kühlkreislauf beschreibt die LI CUI ET AL: "Experimental study on a multi-evaporator refrigeration system with variable area ratio ejector", APPLIED THERMAL ENGINEERING, PERGAMON, OXFORD, GB, Bd. 102, 2. April 2016, Seiten 196-203, wobei der Kühlkreislauf eine Versuchsanordnung darstellt. Insbesondere soll ein Druckregelventil durch einen Strahlapparat ersetzt werden. Der Kühlkreislauf weist zwei Wärmetauscher auf, mit denen je nach Bedarf unterschiedliche Temperaturbereiche abgedeckt werden sollen. Gegenstand der Versuchsanordnung sind in Supermärkten üblicherweise eingesetzte Kühleinrichtungen für Lebensmittel.

Die US 2012/180510 A1 zeigt einen Kühlkreislauf einer Klimaanlage mit einem Verdichter, zwei Wärmetauschern, einen Strahlapparat und Expansionsventilen. Über ein Zwei-/Vierwegeventil kann Kältemittel von dem Verdichter auf die Wärmetauscher umgeleitet werden, die als Kondensator bzw. zur Erwärmung oder Kühlung dienen.

Der vorliegenden Erfindung liegt daher die Aufgabe zugrunde, eine Temperierkammer und ein Verfahren zur Konditionierung von Luft in einem Raum einer Temperierkammer vorzuschlagen, mit der beziehungsweise dem die Temperierkammer energiesparend betrieben werden kann.

Diese Aufgabe wird durch eine Temperierkammer mit den Merkmalen des Anspruchs 1 und ein Verfahren mit den Merkmalen des Anspruchs 14 gelöst.

Die erfindungsgemäße Temperierkammer zur Konditionierung von Luft, insbesondere Prüfkammer oder dergleichen, umfasst einen gegenüber einer Umgebung verschließbaren und temperaturisolierten Raum bzw. Prüfraum zur Aufnahme von Prüfgut, und eine Temperiervorrichtung zur Temperierung des Raums, wobei mittels der Temperiervorrichtung eine Temperatur in einem Temperaturbereich von -50 °C bis +180 °C innerhalb des Raums ausbildbar ist, wobei die Temperiervorrichtung eine Kühleinrichtung mit einem Kühlkreislauf mit einem Kältemittels, einem Wärmeübertrager, einem Verdichter, einem Kondensator und einem Expansionsorgan aufweist, wobei an einer Niederdruckseite des Kühlkreislaufs in einer Strömungsrichtung nachfolgend dem Wärmeübertrager und vor dem Verdichter ein Strahlapparat angeschlossen ist, wobei an einer Hochdruckseite des Kühlkreislaufs in der Strömungsrichtung nachfolgend dem Verdichter ein erster Bypass angeschlossen ist, wobei über den ersten Bypass das Kältemittel als Treibmedium von der Hochdruckseite dem Strahlapparat zuführbar ist, wobei der erste Bypass an der Hochdruckseite des Kühlkreislaufs in der Strömungsrichtung vor dem Kondensator angeschlossen ist, wobei in dem Kühlkreislauf ein zweiter Bypass mit zumindest einem zweiten Regelorgan ausgebildet ist, wobei der zweite Bypass in der Strömungsrichtung vor dem Expansionsorgan und nachfolgend dem Kondensator an den Kühlkreislauf angeschlossen ist und das Expansionsorgan überbrückt, wobei über das zweite Regelorgan Kältemittel so dosierbar ist, dass eine Sauggastemperatur und/oder ein Sauggasdruck des Kältemittels auf der Niederdruckseite des Kühlkreislaufs vor dem Verdichter regelbar ist, wobei der zweite Bypass an den ersten Bypass angeschlossen ist.

Der Strahlapparat wird gemeinhin auch als Strahlpumpe oder Treibmittelpumpe bezeichnet, obwohl dieser keine bewegten Teile umfasst und daher nicht zwingend als eine Maschine angesehen werden muss. Der Strahlapparat ist demnach in einem Leitungsabschnitt des Kühlkreislaufs in Strömungsrichtung vor dem Verdichter angeordnet, wobei das Treibmedium zum Betrieb des Strahlapparats diesem über den ersten Bypass zugeführt wird. Der erste Bypass ist an den Strahlapparat angeschlossen, so dass Kältemittel bzw. Treibmedium von der Hochdruckseite in den Strahlapparat auf der Niederdruckseite geleitet werden kann. Mit dem Strahlapparat ist es so möglich eine Druckerhöhung in dem Leitungsabschnitt des Kühlkreislaufs zwischen dem Strahlapparat und dem Verdichter zu bewirken. Eine Erhöhung des Saugdrucks unmittelbar vor dem Verdichter durch den Strahlapparat ermöglicht einen effizienteren Betrieb des Verdichters am optimalen Arbeitspunkt, so dass eine Leistungsfähigkeit des Verdichters besser ausgenutzt werden kann und gegebenenfalls auch ein kleiner dimensionierter Verdichter zum Einsatz kommen kann. Gleichzeitig ist es möglich den Verdampfungsdruck beziehungsweise den Saugdruck in Strömungsrichtung vor dem Strahlapparat und nach dem Wärmetauscher so weit abzusenken, dass mit der Kühleinrichtung vergleichsweise tiefe Temperaturen erreicht werden können. Insgesamt kann die Kühleinrichtung dann mit einem geringeren Energieeinsatz betrieben werden. Die Kühleinrichtung kann alleine mit dem Expansionsorgan und dem ersten Bypass ausgebildet sein, das heißt, dass nicht zwingend ein weiteres Expansionsorgan oder ein weiterer Bypass vorhanden sein muss.

Der Strahlapparat kann eine mit dem ersten Bypass verbundene Treibdüse und eine Mischkammer aufweisen, wobei das Treibmedium über die Treibdüse in die Mischkammer in der Strömungsrichtung des Kühlkreislaufs einbringbar ist, wobei die Mischkammer einen Leitungsabschnitt des Kühlkreislaufs der Niederdruckseite ausbilden kann. Das aus der Treibdüse austretende Kältemittel bzw. Treibmedium kann dann Kältemittel aus dem Leitungsabschnitt mitreißen und in Richtung des Verdichters fördern. Vorteilhaft ist es, wenn die Mischkammer sich in Richtung des Verdichters aufweitet und/oder ergänzend einen Diffusor aufweist. So ist es möglich dann noch einen weiteren Druckanstieg vor dem Verdichter in dem Leitungsabschnitt zu bewirken. Gleichzeitig kann Kältemittel aus dem dem Strahlapparat vorgelagerten Leitungsabschnitt des Kühlkreislaufs dann von dem Strahlapparat angesaugt werden. Dies kann ein weiteres Absenken eines Drucks in dem Leitungsabschnitt vor dem Strahlapparat bewirken, was eine Erzielung niedrigerer Temperaturen mit der Kühleinrichtung ermöglicht. Da es sich bei dem Kältemittel bzw. Treibmedium von der Hochdruckseite um verdichtetes und heißes Kältemittel handeln kann, kann auch eine Temperaturerhöhung in dem Leitungsabschnitt vor dem Verdichter erzielt werden. Weiter kann das Treibmedium von der Hochdruckseite auch bereits flüssiges Kältemittel sein.

Der erste Bypass kann mit zumindest einem regelbaren ersten Regelorgan ausgebildet sein. Der Strahlapparat kann so über das erste Regelorgan regelbar ausgebildet sein, wobei der Strahlapparat prinzipiell auch mit einer festen Einstellung ausgebildet sein kann. Durch das erste Regelorgan kann dann der im Wärmeübertrager erreichbare Verdampfungsdruck, und damit die mit der Kühleinrichtung erzielbare Temperatur, beeinflusst werden. Darüber hinaus kann durch die Verbindung von Hochdruckseite und Niederdruckseite über das erste Regelorgan bzw. den ersten Bypass sichergestellt werden, dass bei einem Anlagenstillstand das verdichtete, flüssige und/oder gasförmige Kältemittel von der Hochdruckseite allmählich auf die Niederdruckseite des Kühlkreislaufs strömt. So wird auch bei einem geschlossenen Expansionsorgan sichergestellt, dass ein allmählicher Druckausgleich zwischen der Hochdruckseite und der Niederdruckseite erfolgt.

Erfindungsgemäß ist der erste Bypass an der Hochdruckseite des Kühlkreislaufs in der Strömungsrichtung vor dem Kondensator angeschlossen. Dann kann verdichtetes, heißes und gasförmiges Kältemittel von der Hochdruckseite dem Strahlapparat als Treibmedium zugeführt werden.

Der erste Bypass kann im Unterschied zu der Erfindung alternativ an der Hochdruckseite des Kühlkreislaufs in der Strömungsrichtung nach dem Kondensator angeschlossen sein. Dann kann verdichtetes, kaltes und flüssiges Kältemittel von der Hochdruckseite dem Strahlapparat als Treibmedium zugeführt werden.

Erfindungsgemäß ist in dem Kühlkreislauf ein zweiter Bypass mit zumindest einem zweiten Regelorgan ausgebildet, wobei der zweite Bypass in der Strömungsrichtung vor dem Expansionsorgan und nachfolgend dem Kondensator an den Kühlkreislauf angeschlossen ist, und das Expansionsorgan überbrückt, wobei über das zweite Regelorgan das Kältemittel so dosierbar ist, dass eine Sauggastemperatur und/oder ein Sauggasdruck des Kältemittels auf der Niederdruckseite des Kühlkreislaufs vor dem Verdichter geregelt werden kann. Dadurch kann unter anderem verhindert werden, dass der Verdichter, bei dem es sich beispielsweise um einen Kompressor handeln kann, eventuell überhitzt und dann beschädigt wird. Folglich kann über den zweiten Bypass durch Betätigung des zweiten Regelorgans vor dem Verdichter befindliches gasförmiges Kältemittel durch Zudosieren von noch flüssigem Kältemittel gekühlt werden. Eine Betätigung des zweiten Regelorgans kann durch eine Steuervorrichtung erfolgen, die ihrerseits mit einem Druck und/oder Temperatursensor in dem Kühlkreislauf vor dem Verdichter gekoppelt ist. Besonders vorteilhaft ist es, wenn über den zweiten Bypass eine Überhitzung des Sauggases von 2K bis 60K bezogen auf eine Sauggastemperatur eingestellt werden kann. Auch kann das Kältemittel so dosiert werden, dass eine Betriebsdauer des Verdichters regelbar ist. Prinzipiell ist es nachteilig, wenn der Verdichter bzw. Kompressor vielfach eingeschaltet und ausgeschaltet wird. Eine Lebensdauer eines Kompressors kann verlängert werden, wenn dieser längere Zeitabschnitte in Betrieb ist. Über den zweiten Bypass kann das Kältemittel an dem Expansionsorgan vorbeigeführt werden, um beispielsweise ein automatisches Abschalten des Kompressors zu verzögern und eine Betriebsdauer des Kompressors zu verlängern. Optional kann der zweite Bypass mit dem zweiten Regelorgan zur Regelung einer Druckdifferenz zwischen der Hochdruckseite und der Niederdruckseite des Kühlkreislaufs genutzt werden. Beispielsweise kann eine Druckdifferenz so ausgeglichen werden.

Der zweite Bypass kann im Unterschied zu der Erfindung in Strömungsrichtung nachfolgend dem Wärmeübertrager und vor dem Strahlapparat an den Kühlkreislauf angeschlossen sein. So ist es dann möglich bereits vor dem Strahlapparat Kältemittel von der Hochdruckseite in die Niederdruckseite einzuleiten.

Erfindungsgemäß ist der zweite Bypass an dem ersten Bypass angeschlossen. Dann ist es möglich Kältemittel von der Hochdruckseite über den zweiten Bypass und den ersten Bypass in den Strahlapparat einzuleiten und als Treibmedium zu nutzen. Da das Kältemittel aus dem zweiten Bypass verflüssigt ist, und das Kältemittel aus dem ersten Bypass, welches vor dem Kondensator aus der Hochdruckseite entnommen wurde, gasförmig ist, kann hier eine geeignete Mischung von flüssigen und gasförmigen Kältemittel zum Antrieb des Strahlapparats ausgebildet werden. Weiter kann der Massestrom des Kältemittels aus dem zweiten Bypass zur Erhöhung eines Antriebsmassestroms des Kältemittels bzw. Treibmediums im ersten Bypass genutzt werden, so dass ein Druck in einem Leitungsabschnitt vor dem Verdichter noch weiter erhöht werden kann. Der zweite Bypass kann vorteilhaft an den ersten Bypass zwischen dem ersten Regelorgan und dem Strahlapparat angeschlossen sein. In dem Kühlkreislauf kann ein weiterer Bypass mit zumindest einem weiteren Regelorgan ausgebildet sein, wobei der weitere Bypass in der Strömungsrichtung vor dem Strahlapparat und nachfolgend dem Wärmeübertrager, sowie vor dem Verdichter und nachfolgend dem Strahlapparat an den Kühlkreislauf angeschlossen sein kann und so den Strahlapparat überbrückt. Bei bestimmten Betriebszuständen der Kühleinrichtung ist es möglich, dass ein erstes Regelorgan des ersten Bypasses und, wenn vorhanden, ein zweites Regelorgan eines zweiten Bypasses geschlossen ist, so dass dem Strahlapparat kein Treibmittel zugeführt werden kann. Eine Erhöhung eines Drucks in dem Leitungsabschnitt vor dem Verdichter kann dann mit dem Strahlapparat nicht mehr bewirkt werden. Hingegen kann der Strahlapparat, da er in dem Kühlkreislauf angeordnet ist, dann einen unerwünschten Druckabfall vor dem Verdichter bewirken. Über den weiteren Bypass ist es dann möglich den Strahlapparat, der prinzipiell nicht ausgeschaltet werden kann, zu überbrücken und so einen Leitungsquerschnitt des Kühlkreislaufs vor dem Verdichter zu erweitern. Ein unerwünschter Druckverlust vor dem Verdichter kann so vermieden werden. Optional ist es möglich, dass weitere Regelorgan mit einem Rückschlagventil auszubilden, welches ein Zurückströmen von Kältemittel entgegen der Strömungsrichtung des Kühlkreislaufs verhindert.

Der Kühlkreislauf kann einen internen Wärmeübertrager aufweisen, wobei der interne Wärmeübertrager an der Hochdruckseite des Kühlkreislaufs in der Strömungsrichtung vor dem Expansionsorgan und nachfolgend dem Kondensator, und an der Niederdruckseite des Kühlkreislaufs in der Strömungsrichtung vor dem Verdichter und nachfolgend dem Wärmeübertrager angeschlossen sein kann, wobei das Kältemittel der Hochdruckseite von dem Kältemittel der Niederdruckseite mittels des internen Wärmeübertragers gekühlt werden kann. So kann die Verdampfungstemperatur des mittels des internen Wärmeübertragers gekühlten Kältemittels am Expansionsorgan relativ zu einer Verdampfungstemperatur eines ungekühlten Kältemittels abgesenkt werden. Die über den internen Wärmetauscher von der Niederdruckseite auf die Hochdruckseite übertragene Kälteleistung wird somit zumindest teilweise, bevorzugt ausschließlich zur Absenkung der Verdampfungstemperatur des Kältemittels am Expansionsorgan genutzt. Weiter wird es dann auch möglich, ein zeotropes Kältemittel mit einem Temperaturglide zu verwenden, wobei dann der Ort der Taupunkttemperatur des Kältemittels bzw. der Taupunkt des Kältemittels in den internen Wärmeübertrager verschoben werden kann. Infolge des Temperaturglides des zeotropen Kältemittels kann die erzielte Taupunkttemperatur des Kältemittels vergleichsweise hoch sein und so eine weitergehende Abkühlung des Wärmeübertragers verhindern. Demnach kann nur ein Teil des Kältemittels in dem Wärmeübertrager verdampfen und der nicht nutzbare Teil des Nassdampfanteils des Kältemittels in den internen Wärmeübertrager verlagert werden. Insgesamt wird es so möglich, auch Kältemittel mit einem Masseanteil an CO², die einerseits umweltfreundlich sind aber andererseits zeotrope Eigenschaften aufweisen, zur Ausbildung niedriger Temperaturen in einem Raum zu verwenden. Dadurch, dass ein Teil des Temperaturglides bzw. ein Teil des Nassdampfes des Kältemittels von dem Wärmeübertrager im Raum in den internen Wärmeübertrager verlagert werden kann, wird es darüber hinaus möglich, mit dem zeotropen Kältemittel eine vergleichsweise verbesserte Temperaturkonstanz zu erzielen. Eine über den Wärmeübertrager abgegebene Kälteleistung wird nur innerhalb eines Abschnitts des Temperaturglides erzeugt, so dass eine Verschiebung des Taupunktes des Kältemittels im Kühlkreislauf kaum eine Temperaturkonstanz des Wärmeübertragers beeinflussen kann.

Während der Absenkung der Verdampfungstemperatur des Kältemittels der Hochdruckseite kann ein Saugdruck des Kältemittels der Niederdruckseite konstant gehalten werden. Ein größerer anlagentechnischer Aufwand, beispielsweise eine ergänzende Regelung des Saugdrucks, wie auch über eine Regelung des Expansionsorgans in Abhängigkeit des Saugdrucks, ist dann nicht zwingend erforderlich. Insbesondere kann der Verdichter dann auch mit einer konstanten Leistung, unabhängig von einem Betriebszustand des Kühlkreislaufs, betrieben werden. Gerade bei einer Verwendung von Kolbenpumpen als Verdichter ist es wesentlich, dass diese zur Erzielung einer langen Lebensdauer über lange Zeiträume mit konstanter Drehzahl im Einsatz sind.

Das Kältemittel kann auf einer Verdampfungsstrecke des Kühlkreislaufs von dem Expansionsorgan bis einschließlich dem internen Wärmeübertrager bei einem konstanten Saugdruck verdampfen. Bei dem konstanten Saugdruck beziehungsweise Verdampfungsdruck des Kältemittels kann dann das Kältemittel von dem Expansionsorgan mit einer niedrigen Verdampfungstemperatur bis hin zu dem internen Wärmeübertrager mit einer hohen Verdampfungstemperatur entsprechend dem Temperaturglide des Kältemittels verdampfen. Die durch den Temperaturglide sich ergebende Taupunkttemperatur kann dabei über der Temperatur des zu kühlenden Mediums beziehungsweise der Luft in dem Raum bzw. Prüfraum liegen. Sobald eine Verdampfungstemperatur des Kältemittels bei gleichem Saugdruck der Temperatur der zu kühlenden Luft in dem Raum entspricht, kann keine weitere Abkühlung der Luft erzielt werden. Die Taupunkttemperatur, die im Wärmetauscher erreicht wird, liegt jedoch noch unter der Flüssigkeitstemperatur des Kältemittels auf der Hochdruckseite des internen Wärmeübertragers, so dass eine Flüssigkeitstemperatur des Kältemittels weiter reduziert werden kann. Demnach kann eine Verdampfungstemperatur nach dem Expansionsorgan ohne eine Veränderung des Saugdrucks abgesenkt und damit eine weitergehende Kühlung der Luft in dem Raum erzielt werden.

Der interne Wärmeübertrager kann an der Niederdruckseite in der Strömungsrichtung vor dem Verdichter und nachfolgend dem Strahlapparat angeschlossen sein. Bei dieser Ausführungsvariante kann das im Leitungsabschnitt vor dem Verdichter sich befindliche Kältemittel vorteilhaft zur Unterkühlung des Kältemittels auf der Hochdruckseite genutzt werden.

Alternativ kann der interne Wärmeübertrager an der Niederdruckseite in der Strömungsrichtung vor dem Strahlapparat und nachfolgend dem Wärmeübertrager angeschlossen sein. So kann sichergestellt werden, dass im Wesentlichen gasförmiges Kältemittel dem Strahlapparat zugeführt werden kann. Gleichzeitig kann das Kältemittel zur Unterkühlung des Kältemittels auf der Hochdruckseite genutzt werden.

Der interne Wärmeübertrager kann als eine Unterkühlstrecke oder ein Wärmetauscher, insbesondere Plattenwärmetauscher ausgebildet sein. Die Unterkühlstrecke kann bereits durch zwei aneinander anliegende Leitungsabschnitte des Kühlkreislaufs ausgebildet sein.

Mittels der Temperiervorrichtung kann eine Temperatur in einem Temperaturbereich von -70 °C bis +180 °C, vorzugsweise -85 °C bis +200 °C innerhalb des Raums ausgebildet sein. Auch kann mittels der Temperiervorrichtung eine Temperatur von > +60 °C bis +180 °C auf eine Temperatur von < -50 °C innerhalb des Raums reduziert werden. Das Kältemittel wird dann im Wärmeübertrager durch die vergleichsweise hohe Temperatur im Raum stark erwärmt, weshalb der Kühlkreislauf hinsichtlich seiner Konstruktion zumindest auf der Niederdruckseite des Kühlkreislaufs, an ein in diesem Temperaturbereich erwärmtes Kältemittel technisch angepasst sein kann. Ein derart erwärmtes Kältemittel ist sonst nicht mehr auf der Hochdruckseite des Kühlkreislaufs optimal nutzbar.

In einer Ausführungsform der Prüfkammer kann der Wärmeübertrager in dem Raum angeordnet sein. Auch kann der Wärmeübertrager dann in einem Luftbehandlungsraum des Raums angeordnet sein, so dass von einem Lüfter umgewälzte Luft mit einem Wärmeübertrager in Kontakt gelangen kann. So wird es möglich eine umgewälzte Luftmenge des Raums mittels der Kühleinrichtung über den Wärmeübertrager im Raum direkt abzukühlen. Die Prüfkammer kann den Kühlkreislauf als einen alleinigen, einzigen Kühlkreislauf aufweisen. Der Kühlkreislauf ist dann direkt an den Raum angeschlossen.

Alternativ kann der Wärmeübertrager einen Kaskadenwärmeübertrager für einen weiteren Kühlkreislauf der Kühleinrichtung ausbilden. Demnach kann die Prüfkammer dann zumindest zwei Kühlkreisläufe aufweisen, wobei der Kühlkreislauf eine erste Stufe der Kühleinrichtung ausbilden kann.

In einer weiteren Ausführungsform der Prüfkammer kann der Kondensator als ein Kaskaden-Wärmeübertrager eines weiteren Kühlkreislaufs der Kühleinrichtung ausgebildet sein. Demnach kann die Prüfkammer dann zumindest zwei Kühlkreisläufe aufweisen, wobei der Kühlkreislauf eine zweite Stufe der Kühleinrichtung und ein weiterer Kühlkreislauf, der dann dem Kühlkreislauf vorgelagert ist, eine erste Stufe der Kühleinrichtung ausbilden kann. Bei dieser Ausführungsform einer Prüfkammer wird es möglich, besonders niedrige Temperaturen in dem Raum auszubilden.

Die Temperiervorrichtung kann eine Heizeinrichtung mit einer Heizung und einem Heiz-Wärmeübertrager in dem Raum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Raum ermöglicht wird. Wenn der Wärmeübertrager und der Heiz-Wärmeübertrager mittels einer Regeleinrichtung zur Kühlung oder Erwärmung der im Raum umgewälzten Luft gezielt gesteuert werden können, kann mittels der Temperiervorrichtung innerhalb des Raums eine Temperatur in dem vorstehend angegebenen Temperaturbereich ausgebildet werden. Dabei kann unabhängig vom Prüfgut beziehungsweise eines Betriebszustandes des Prüfgutes eine zeitliche Temperaturkonstanz von ±1 K, vorzugsweise ±0,3 K bis ±0,5 K oder kleiner ±0,3 K während eines Prüfintervalls in dem Raum ausgebildet werden. Unter einem Prüfintervall wird ein Zeitabschnitt eines vollständigen Prüfzeitraums verstanden, in dem das Prüfgut einer im Wesentlichen gleichbleibenden Temperatur oder Klimabedingung ausgesetzt wird. Der Heiz-Wärmeübertrager kann zusammen mit dem Wärmeübertrager des Kühlkreislaufs derart kombiniert sein, dass ein gemeinsamer Wärmeübertragerkörper ausgebildet ist, der vom Kältemittel durchströmbar ist und der Heizelemente einer elektrischen Widerstandsheizung aufweist.

Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

Das Expansionsorgan und/oder das Regelorgan kann ein Drosselorgan und ein Magnetventil aufweisen, wobei über das Drosselorgan und das Magnetventil Kältemittel dosiert werden kann. Das Drosselorgan kann ein einstellbares Ventil oder eine Kapillare sein, über das dann mittels des Magnetventils Kältemittel geleitet wird. Das Magnetventil kann seinerseits mittels einer Regeleinrichtung der Temperiervorrichtung betätigt werden. Prinzipiell kann das Expansionsorgan und/oder das Regelorgan dann auch als ein Absperrorgan zum vollständigen Verschließen einer Leitung dienen.

Auch kann die Temperiervorrichtung eine Regeleinrichtung mit zumindest einem Drucksensor und/oder zumindest einem Temperatursensor in dem Kühlkreislauf umfassen, wobei ein Magnetventil mittels der Regeleinrichtung in Abhängigkeit von einer gemessen Temperatur beziehungsweise eines Drucks betätigt werden kann. Die Regeleinrichtung kann Mittel zur Datenverarbeitung umfassen, die Datensätze von Sensoren verarbeiten und die Magnetventile ansteuern kann. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und gegebenenfalls eine Abschaltung der Prüfkammer veranlassen, um die Prüfkammer und das Prüfgut vor einer Beschädigung durch kritische oder unerwünschte Betriebszustände der Prüfkammer zu schützen.

Bei dem erfindungsgemäßen Verfahren zur Konditionierung von Luft in einem gegenüber einer Umgebung verschließbaren und temperaturisolierten Raum einer Temperierkammer, insbesondere Prüfkammer oder dergleichen zur Aufnahme von Prüfgut, wird mittels einer Kühleinrichtung einer Temperiervorrichtung der Temperierkammer, mit einem Kühlreislauf mit einem Kältemittel, einem Wärmeübertrager, einem Verdichter, einem Kondensator und einem Expansionsorgan, eine Temperatur in einem Temperaturbereich von -50 °C bis +180 °C innerhalb des Raums ausgebildet, wobei an einer Niederdruckseite des Kühlkreislaufs in einer Strömungsrichtung nachfolgend dem Wärmeübertrager und vor dem Verdichter ein Strahlapparat angeschlossen ist, wobei über einen an einer Hochdruckseite des Kühlkreislaufs in der Strömungsrichtung nachfolgend dem Verdichter angeschlossenen ersten Bypass das Kältemittel als Treibmedium von der Hochdruckseite dem Strahlapparat zugeführt wird. Zu den Vorteilen des erfindungsgemäßen Verfahrens wird auf die Vorteilsbeschreibung der erfindungsgemäßen Temperierkammer verwiesen, wobei der erste Bypass an der Hochdruckseite des Kühlkreislaufs in der Strömungsrichtung vor dem Kondensator angeschlossen ist, wobei in dem Kühlkreislauf ein zweiter Bypass mit zumindest einem zweiten Regelorgan ausgebildet ist, wobei der zweite Bypass in der Strömungsrichtung vor dem Expansionsorgan und nachfolgend dem Kondensator an den Kühlkreislauf angeschlossen ist und das Expansionsorgan überbrückt, wobei über das zweite Regelorgan Kältemittel so dosiert wird, dass eine Sauggastemperatur und/oder ein Sauggasdruck des Kältemittels auf der Niederdruckseite des Kühlkreislaufs vor dem Verdichter geregelt wird, wobei der zweite Bypass an den ersten Bypass angeschlossen ist.

Das Treibmedium kann über eine mit dem den ersten Bypass verbundene Treibdüse des Strahlapparats in eine Mischkammer des Strahlapparats in der Strömungsrichtung des Kühlkreislaufs eingebracht werden, wobei das Kältemittel als Saugmedium in der Strömungsrichtung vor dem Strahlapparat in die Mischkammer gesaugt und in der Strömungsrichtung nach dem Strahlapparat mit einem gegenüber dem Saugmedium erhöhten Druck aus der Mischkammer ausgegeben werden kann.

Weitere Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung einer ersten Ausführungsform einer von der Erfindung abweichenden Kühleinrichtung;
- **Fig. 2**: eine schematische Darstellung einer zweiten Ausführungsform einer von der Erfindung abweichenden Kühleinrichtung;
- **Fig. 3**: eine schematische Darstellung einer dritten, erfindungsentsprechenden, Ausführungsform einer Kühleinrichtung;
- **Fig. 4**: eine schematische Darstellung einer vierten, erfindungsentsprechenden, Ausführungsform einer Kühleinrichtung;
- **Fig. 5**: eine schematische Darstellung einer fünften Ausführungsform einer von der Erfindung abweichenden Kühleinrichtung;
- **Fig. 6**: eine schematische Darstellung einer sechsten Ausführungsform einer von der Erfindung abweichenden Kühleinrichtung;
- **Fig. 7**: eine schematische Darstellung einer siebten Ausführungsform einer von der Erfindung abweichenden Kühleinrichtung;
- **Fig. 8**: eine schematische Darstellung einer achten Ausführungsform einer von der Erfindung abweichenden Kühleinrichtung.

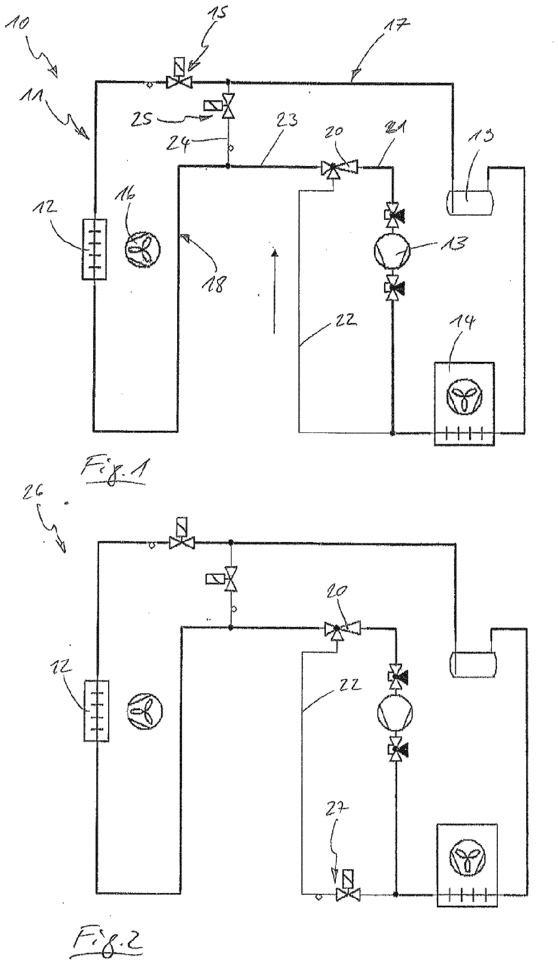

Die **Fig. 1** zeigt eine erste Ausführungsform einer Kühleinrichtung 10 einer hier nicht näher dargestellten Temperierkammer bzw. Prüfkammer, die außerhalb der vorliegenden Erfindung liegt, jedoch für deren Verständnis hilfreich ist.

Die Kühleinrichtung 10 umfasst einen Kühlkreislauf 11 mit einem Kältemittel, einem Wärmeübertrager 12, einem Verdichter 13 und einem Kondensator 14 sowie einem Expansionsorgan 15. Der Wärmeübertrager 12 ist in einem hier nicht dargestellten Raum bzw. Prüfraum der Prüfkammer angeordnet. In dem Raum ist ein Lüfter 16 zum Umwälzen von Luft an dem Wärmeübertrager 12 vorgesehen. Weiter weist der Kühlkreislauf 11 eine Hochdruckseite 17, eine Niederdruckseite 18 und einen Ausgleichsbehälter 19 auf.

Das Kältemittel wird vor dem Verdichter 13 angesaugt und komprimiert, so dass ein Druck auf der Hochdruckseite 17 gegenüber der Niederdruckseite 18 erhöht wird. In Strömungsrichtung nachfolgend dem Verdichter 13 wird das Kältemittel mit dem Kondensator 14 verflüssigt. Am Expansionsorgan 15 erfolgen eine Entspannung des Kältemittels und zumindest eine teilweise oder vollständige Verdampfung in dem Wärmeübertrager 12. Danach gelangt der Nassdampf des Kältemittels wieder zum Verdichter 13. In der Strömungsrichtung des Kältemittels nachfolgend dem Wärmeübertrager 12 und vor dem Verdichter 13 ist ein Strahlapparat 20 an einen Leitungsabschnitt 21 vor dem Verdichter 13 angeschlossen. Weiter ist in der Strömungsrichtung nachfolgend dem Verdichter 13 und vor dem Kondensator 14 ein erster Bypass 22 angeschlossen, über den Kältemittel als ein Treibmedium von der Hochdruckseite 17 dem Strahlapparat 20 zugeführt wird. Der erste Bypass 22 ist mit einer hier nicht dargestellten Treibdüse des Strahlapparats 20 verbunden, über die das Kältemittel in eine hier nicht dargestellte Mischkammer des Strahlapparats 20 als Treibmedium eingebracht wird, derart, dass Kältemittel von einem Leitungsabschnitt 23 in den Kühlkreislauf 11 in Strömungsrichtung vor dem Strahlapparat 20 angesaugt und beschleunigt wird. Dies führt zu einer Druckerhöhung in dem Leitungsabschnitt 21 gegenüber dem im Leitungsabschnitt 23 herrschenden Druck. Vorteilhaft ist es so möglich, den Verdichter 13, der ein Kompressor sein kann, in einem energetisch günstigen Leitungsbereich zu betreiben.

In dem Kühlkreislauf 11 ist ein zweiter Bypass 24 mit zumindest einem zweiten Regelorgan 25 integriert, wobei der zweite Bypass 24 in der Strömungsrichtung des Kältemittels vor dem Expansionsorgan 15 und nachfolgend dem Kondensator 14 an den Kühlkreislauf 11 angeschlossen ist. Der zweite Bypass 24 ist weiter in Strömungsrichtung des Kältemittels nachfolgend dem Wärmeübertrager 12 und vor dem Strahlapparat 20 an den Kühlkreislauf 11 angeschlossen, so dass der zweite Bypass 24 das Expansionsorgan 15 überbrückt. Über das zweite Regelorgan 25 ist nunmehr Kältemittel so dosierbar, dass eine Sauggastemperatur und/oder ein Sauggasdruck des Kältemittels auf der Niederdruckseite 18 des Kühlkreislaufs 11 vor dem Verdichter 13 regelbar ist.

Die **Fig. 2** zeigt eine zweite Ausführungsform einer Kühleinrichtung 26, die außerhalb der vorliegenden Erfindung liegt, jedoch für deren Verständnis hilfreich ist, und bei der im Unterschied zur Kühleinrichtung aus **Fig. 1** in dem ersten Bypass 22 ein erstes Regelorgan 27 angeordnet bzw. angeschlossen ist. Über das erste Regelorgan 27 ist es dann möglich einen Antrieb des Strahlapparates 20 zu regeln. Unter anderem kann dann auch ein erreichbarer Verdampfungsdruck in dem Wärmeübertrager 12 beeinflusst werden.

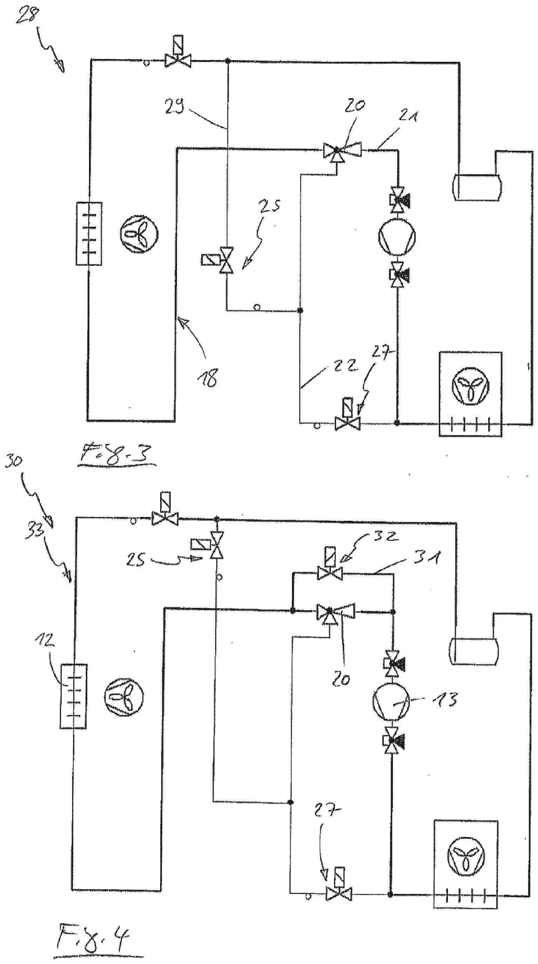

Die **Fig. 3** zeigt eine erfindungsgemäße Ausführungsform einer Kühleinrichtung 28 bei der im Unterschied zu der **Fig. 2** gezeigten Kühleinrichtung ein zweiter Bypass 29 nicht direkt an der Niederdruckseite 18 angeschlossen ist, sondern an dem ersten Bypass 22. Folglich ist der zweite Bypass 29 in Strömungsrichtung des Kältemittels nachfolgend dem ersten Regelorgan 27 und vor dem Strahlapparat 20 an den ersten Bypass 22 angeschlossen. Das über das zweite Regelorgan 25 des zweiten Bypass 29 geregelt strömende Kältemittel kann dann ebenfalls als Treibmedium für den Strahlapparat 20 genutzt werden. Diese Erhöhung eines Antriebmassestroms des Strahlapparats 20 ermöglicht eine weitere Druckerhöhung in dem Leitungsabschnitt 21.

Die **Fig. 4** zeigt eine weitere erfindungsgemäße Ausführungsform einer Kühleinrichtung 30, bei der im Unterschied zur Kühleinrichtung aus **Fig. 3** ein weiterer Bypass 31 vorgesehen ist. Der weitere Bypass 31 ist mit einem weiteren Regelorgan 32 ausgebildet und in der Strömungsrichtung des Kältemittels vor dem Strahlapparat 20 und nachfolgend dem Wärmeübertrager 12 an den so ausgebildeten Kühlkreislauf 33 angeschlossen. Weiter ist der weitere Bypass 31 vor dem Verdichter 13 und nachfolgend dem Strahlapparat 20 an den Kühlkreislauf 33 angeschlossen. Wenn das zweite Regelorgan 25 und das erste Regelorgan 27 geschlossen sind, kann kein Treibmassestrom für den Strahlapparat 20 bereitgestellt werden, so dass auch mit dem Strahlapparat 20 keine Druckerhöhung vor dem Verdichter 13 erzeugt werden kann. Durch den Strahlapparat 20, der dann nicht angetrieben ist, kommt es zu einem unterwünschten Druckabfall vor dem Verdichter 13. Durch den dritten Bypass 31 ist es nun möglich den Strahlapparat 20 zu überbrücken, um so einen Leitungsquerschnitt zu vergrößern und diesen Druckabfall zu verhindern.

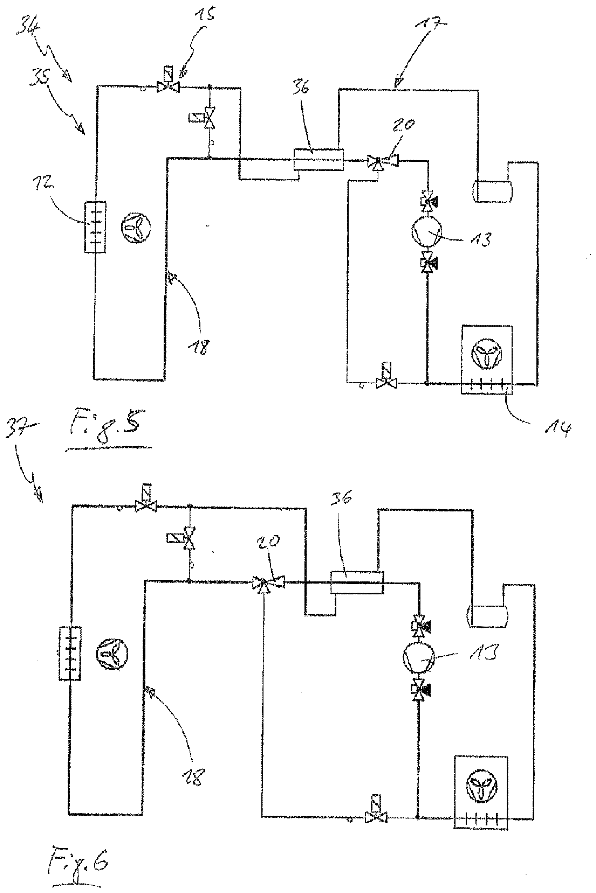

Die Fig. 5 zeigt eine weitere Ausführungsform einer Kühleinrichtung 34, die außerhalb der vorliegenden Erfindung liegt, jedoch für deren Verständnis hilfreich ist, und bei der im Unterschied zur Kühleinrichtung aus **Fig. 2** in dem so ausgebildeten Kühlkreislauf 35 ein interner Wärmeübertrager 36 angeschlossen ist. Insbesondere ist der interne Wärmeübertrager 36 an der Hochdruckseite 17 in der Strömungsrichtung des Kältemittels vor dem Expansionsorgan 15 und nachfolgend dem Kondensator 14, und an der Niederdruckseite 18 in der Strömungsrichtung vor dem Strahlapparat 20 und nachfolgend dem Wärmeübertrager 12 angeschlossen. Auf der Hochdruckseite 17 kann dann zu dem Expansionsorgan 15 fließendes Kältemittels mittels des internen Wärmeübertragers 36 gekühlt werden. Die Kühlung kann dadurch erfolgen, dass das Kältemittel auf der Niederdruckseite 18 im internen Wärmeübertrager 36 noch nachverdampft wird. Insbesondere kann dann auch ein Kältemittel mit einem besonders großen Temperaturglide verwendet werden.

Die **Fig. 6** zeigt eine alternative Ausführungsform einer Kühleinrichtung 37, die außerhalb der vorliegenden Erfindung liegt, jedoch für deren Verständnis hilfreich ist, und bei der im Unterschied zur Kühleinrichtung aus der **Fig. 5** der interne Wärmeübertrager 36 zwischen dem Strahlapparat 20 und dem Verdichter 13 an die Niederdruckseite 18 angeschlossen ist.

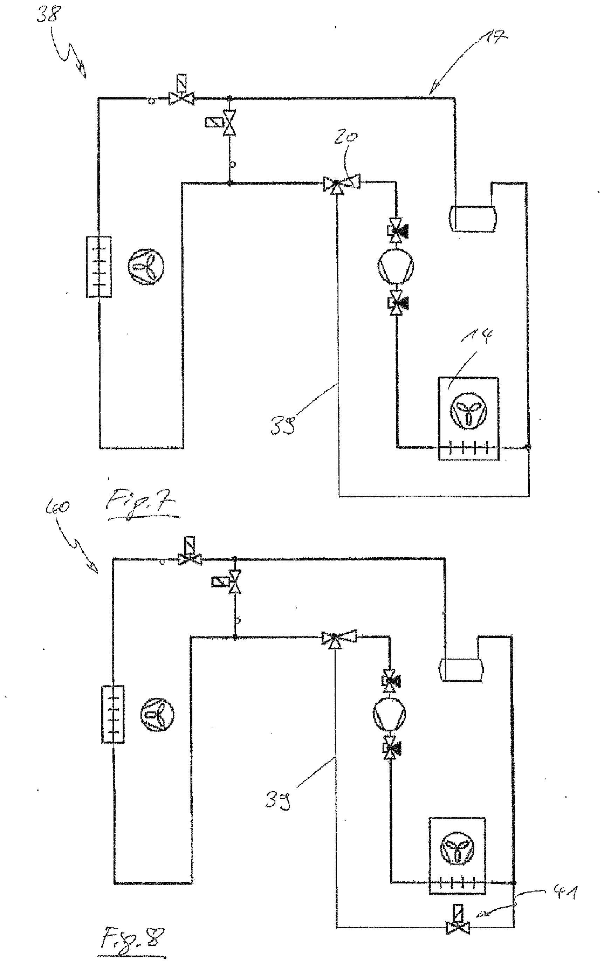

Die **Fig. 7** zeigt eine Ausführungsform einer Kühleinrichtung 38, die außerhalb der vorliegenden Erfindung liegt, jedoch für deren Verständnis hilfreich ist, und bei der im Unterschied zur Kühleinrichtung aus **Fig. 1** in der Strömungsrichtung nachfolgend dem Kondensator 14 ein erster Bypass 39 angeschlossen ist. Über den ersten Bypass 39 kann kaltes und flüssiges Kältemittel als ein Treibmedium von der Hochdruckseite 17 dem Strahlapparat 20 zugeführt werden.

Die **Fig. 8** zeigt eine Ausführungsform einer Kühleinrichtung 40, die außerhalb der vorliegenden Erfindung liegt, jedoch für deren Verständnis hilfreich ist, und bei der im Unterschied zur Kühleinrichtung aus **Fig. 7** in dem ersten Bypass 39 ein erstes Regelorgan 41 angeordnet bzw. angeschlossen ist.

## Patentansprüche

1. Temperierkammer zur Konditionierung von Luft, insbesondere Prüfkammer oder dergleichen, umfassend einen gegenüber einer Umgebung verschließbaren und temperaturisolierten Raum zur Aufnahme von Prüfgut, und eine Temperiervorrichtung zur Temperierung des Raums, wobei mittels der Temperiervorrichtung eine Temperatur in einem Temperaturbereich von -50 °C bis +180 °C innerhalb des Raums ausbildbar ist, wobei die Temperiervorrichtung eine Kühleinrichtung (28, 30) mit einem Kühlkreislauf (11, 33) mit einem Kältemittel, einem Wärmeübertrager (12), einem Verdichter (13), einem Kondensator (14) und einem Expansionsorgan (15) aufweist, wobei an einer Hochdruckseite (17) des Kühlkreislaufs in der Strömungsrichtung nachfolgend dem Verdichter ein erster Bypass (22) angeschlossen ist,
**dadurch gekennzeichnet,**
**dass** an einer Niederdruckseite (18) des Kühlkreislaufs in einer Strömungsrichtung nachfolgend dem Wärmeübertrager und vor dem Verdichter ein Strahlapparat (20) angeschlossen ist, wobei über den ersten Bypass das Kältemittel als Treibmedium von der Hochdruckseite dem Strahlapparat zuführbar ist, wobei der erste Bypass an der Hochdruckseite des Kühlkreislaufs in der Strömungsrichtung vor dem Kondensator angeschlossen ist, wobei in dem Kühlkreislauf (11, 33) ein zweiter Bypass (29) mit zumindest einem zweiten Regelorgan (25) ausgebildet ist, wobei der zweite Bypass in der Strömungsrichtung vor dem Expansionsorgan und nachfolgend dem Kondensator an den Kühlkreislauf angeschlossen ist und das Expansionsorgan überbrückt, wobei über das zweite Regelorgan Kältemittel so dosierbar ist, dass eine Sauggastemperatur und/oder ein Sauggasdruck des Kältemittels auf der Niederdruckseite des Kühlkreislaufs vor dem Verdichter regelbar ist, wobei der zweite Bypass an den ersten Bypass angeschlossen ist.

2. Temperierkammer nach Anspruch 1,
**dadurch gekennzeichnet,**
**dass** der Strahlapparat (20) eine mit dem ersten Bypass (22) verbundene Treibdüse und eine Mischkammer aufweist, wobei das Treibmedium über die Treibdüse in die Mischkammer in der Strömungsrichtung des Kühlkreislaufs (11, 33) einbringbar ist, wobei die Mischkammer einen Leitungsabschnitt des Kühlkreislaufs der Niederdruckseite (18) ausbildet.

3. Temperierkammer nach Anspruch 1 oder 2,
**dadurch gekennzeichnet,**
**dass** der erste Bypass (22) mit zumindest einem ersten Regelorgan (27) ausgebildet ist.

4. Temperierkammer nach einem der vorangehenden Ansprüche,
**dadurch gekennzeichnet,**
**dass** in dem Kühlkreislauf (33) ein weiterer Bypass (31) mit zumindest einem weiteren Regelorgan (32) ausgebildet ist, wobei der weitere Bypass in der Strömungsrichtung vor dem Strahlapparat (20) und nachfolgend dem Wärmeübertrager (12), sowie vor dem Verdichter (13) und nachfolgend dem Strahlapparat an den Kühlkreislauf angeschlossen ist und den Strahlapparat überbrückt.

5. Temperierkammer nach einem der vorangehenden Ansprüche,
**dadurch gekennzeichnet,**
**dass** der Kühlkreislauf einen internen Wärmeübertrager aufweist, wobei der interne Wärmeübertrager an der Hochdruckseite (17) des Kühlkreislaufs in der Strömungsrichtung vor dem Expansionsorgan (15) und nachfolgend dem Kondensator (14), und an der Niederdruckseite (18) des Kühlkreislaufs in der Strömungsrichtung vor dem Verdichter (13) und nachfolgend dem Wärmeübertrager (12) angeschlossen ist, wobei das Kältemittel der Hochdruckseite von dem Kältemittel der Niederdruckseite mittels des internen Wärmeübertragers kühlbar ist.

6. Temperierkammer nach Anspruch 5,
**dadurch gekennzeichnet,**
**dass** der interne Wärmeübertrager an der Niederdruckseite (18) in der Strömungsrichtung vor dem Verdichter (13) und nachfolgend dem Strahlapparat (20) angeschlossen ist.

7. Temperierkammer nach Anspruch 5,
**dadurch gekennzeichnet,**
**dass** der interne Wärmeübertrager an der Niederdruckseite (18) in der Strömungsrichtung vor dem Strahlapparat (20) und nachfolgend dem Wärmeübertrager (12) angeschlossen ist.

8. Temperierkammer nach einem der vorangehenden Ansprüche,
**dadurch gekennzeichnet,**
**dass** mittels der Temperiervorrichtung eine Temperatur in einem Temperaturbereich von -70 °C bis +180 °C, vorzugsweise -85 °C bis +200 °C, innerhalb des Raums ausbildbar ist.

9. Temperierkammer nach einem der vorangehenden Ansprüche,
**dadurch gekennzeichnet,**
**dass** der Wärmeübertrager (12) in dem Raum angeordnet ist.

10. Temperierkammer nach einem der Ansprüche 1 bis 8,
**dadurch gekennzeichnet,**
**dass** der Wärmeübertrager (12) einen Kaskaden-Wärmeübertrager für einen weiteren Kühlkreislauf der Kühleinrichtung (28, 30) ausbildet.

11. Temperierkammer nach einem der vorangehenden Ansprüche,
**dadurch gekennzeichnet,**
**dass** der Kondensator (14) als ein Kaskaden-Wärmeübertrager eines weiteren Kühlkreislaufs der Kühleinrichtung (28, 30) ausgebildet ist.

12. Temperierkammer nach einem der vorangehenden Ansprüche,
**dadurch gekennzeichnet,**
**dass** die Temperiervorrichtung eine Heizeinrichtung mit einer Heizung und einem Heiz-Wärmeübertrager in dem Raum aufweist.

13. Temperierkammer nach einem der vorangehenden Ansprüche,
**dadurch gekennzeichnet,**
**dass** das Expansionsorgan (15) und/oder das Regelorgan (25, 27, 32) ein Drosselorgan und ein Magnetventil aufweist, wobei über das Drosselorgan und das Magnetventil Kältemittel dosierbar ist.

14. Verfahren zur Konditionierung von Luft in einem gegenüber einer Umgebung verschließbaren und temperaturisolierten Raum einer Temperierkammer, insbesondere Prüfkammer oder dergleichen zur Aufnahme von Prüfgut, wobei mittels einer Kühleinrichtung (28, 30) einer Temperiervorrichtung der Temperierkammer, mit einem Kühlkreislauf (11, 33) mit einem Kältemittel, einem Wärmeübertrager (12), einem Verdichter (13), einem Kondensator (14) und einem Expansionsorgan (15), eine Temperatur in einem Temperaturbereich von -50 °C bis +180 °C innerhalb des Raums ausgebildet wird, **dadurch gekennzeichnet,**
**dass** an einer Niederdruckseite (18) des Kühlkreislaufs in einer Strömungsrichtung nachfolgend dem Wärmeübertrager und vor dem Verdichter ein Strahlapparat (20) angeschlossen ist, wobei über einen an einer Hochdruckseite (17) des Kühlkreislaufs in der Strömungsrichtung nachfolgend dem Verdichter angeschlossenen ersten Bypass (22) das Kältemittel als Treibmedium von der Hochdruckseite dem Strahlapparat zugeführt wird, wobei der erste Bypass an der Hochdruckseite des Kühlkreislaufs in der Strömungsrichtung vor dem Kondensator angeschlossen ist, wobei in dem Kühlkreislauf (11, 33) ein zweiter Bypass (29) mit zumindest einem zweiten Regelorgan (25) ausgebildet ist, wobei der zweite Bypass in der Strömungsrichtung vor dem Expansionsorgan und nachfolgend dem Kondensator an den Kühlkreislauf angeschlossen ist und das Expansionsorgan überbrückt, wobei über das zweite Regelorgan Kältemittel so dosiert wird, dass eine Sauggastemperatur und/oder ein Sauggasdruck des Kältemittels auf der Niederdruckseite des Kühlkreislaufs vor dem Verdichter geregelt wird, wobei der zweite Bypass an den ersten Bypass angeschlossen ist.

15. Verfahren nach Anspruch 14,
**dadurch gekennzeichnet,**
**dass** das Treibmedium über eine mit dem den ersten Bypass (22) verbundene Treibdüse des Strahlapparats (20) in eine Mischkammer des Strahlapparats in der Strömungsrichtung des Kühlkreislaufs (11, 33) eingebracht wird, wobei das Kältemittel als Saugmedium in der Strömungsrichtung vor dem Strahlapparat in die Mischkammer gesaugt und in der Strömungsrichtung nach dem Strahlapparat mit einem gegenüber dem Saugmedium erhöhten Druck aus der Mischkammer ausgegeben wird.

## Claims

1. A temperature chamber for conditioning air, in particular a test chamber or the like, the temperature chamber comprising a temperature-insulated space which can be closed off from the surroundings and which serves to receive test material, and a temperature control device for controlling the temperature of the space, the temperature control device allowing a temperature in a temperature range of -50 °C to +180 °C to be established within the space, the temperature control device having a cooling device (28, 30) comprising a cooling circuit (11, 33) with a refrigerant, a heat exchanger (12), a compressor (13), a condenser (14), and an expansion element (15), a first bypass (22) being connected to a high-pressure side (17) of the cooling circuit downstream of the compressor,
**characterized in that**
a jet device (20) is connected to a low-pressure side (18) of the cooling circuit downstream of the heat exchanger and upstream of the compressor, the refrigerant being suppliable to the jet device as a driving fluid from the high-pressure side via the first bypass, the first bypass being connected to the high-pressure side of the cooling circuit upstream of the condenser, a second bypass (29) having at least one second control element (25) being formed in the cooling circuit (11, 33), the second bypass being connected to the cooling circuit upstream of the expansion element and downstream of the condenser and bypassing the expansion element, refrigerant being meterable via the second control element in such a manner that a suction gas temperature and/or a suction gas pressure of the refrigerant on the low-pressure side of the cooling circuit is controllable upstream of the compressor, the second bypass being connected to the first bypass.

2. The temperature chamber according to claim 1,
**characterized in that**
the jet device (20) has a drive nozzle, which is connected to the first bypass (22), and a mixing chamber, the driving fluid being introduced into the mixing chamber in the flow direction of the cooling circuit (11, 33) via the drive nozzle, the mixing chamber forming a conduit section of the cooling circuit of the low-pressure side (18).

3. The temperature chamber according to claim 1 or 2,
**characterized in that**
the first bypass (22) is provided with at least one first control element (27).

4. **characterizedcharacterizedcharacterizedcharacterizedcharacterized** The temperature chamber according to any one of the preceding claims,
**characterized in that**
another bypass (31) having at least one other control element (32) is formed in the cooling circuit (33), the other bypass being connected to the cooling circuit upstream of the jet device (20) and downstream of the heat exchanger (12) and upstream of the compressor (13) and downstream of the jet device and bypassing the jet device.

5. The temperature chamber according to any one of the preceding claims,
**characterized in that**
the cooling circuit has an internal heat exchanger, the internal heat exchanger being connected to the high-pressure side (17) of the cooling circuit upstream of the expansion element (15) and downstream of the condenser (14) and to the low-pressure side (18) of the cooling circuit upstream of the compressor (13) and downstream of the heat exchanger (12), the refrigerant of the high-pressure side being coolable by the refrigerant of the low-pressure side by means of the internal heat exchanger.

6. The temperature chamber according to claim 5,
**characterized in that**
the internal heat exchanger is connected to the low-pressure side (18) upstream of the compressor (13) and downstream of the jet device (20).

7. The temperature chamber according to claim 5,
**characterized in that**
the internal heat exchanger is connected to the low-pressure side (18) upstream of the jet device (20) and downstream of the heat exchanger (12).

8. The temperature chamber according to any one of the preceding claims,
**characterized in that**
a temperature in a temperature range of -70 °C to +180 °C, preferably -85 °C to +200 °C, is establishable within the space by means of the temperature control device.

9. The temperature chamber according to any one of the preceding claims,
**characterized in that**
the heat exchanger (12) is disposed in the space

10. The temperature chamber according to any one of claims 1 to 8, **characterized in that**
the heat exchanger (12) forms a cascade heat exchanger for another cooling circuit of the cooling device (28, 30).

11. The temperature chamber according to any one of the preceding claims,
**characterized in that**
the condenser (14) is realized as a cascade heat exchanger of another cooling circuit of the cooling device (28, 30).

12. The temperature chamber according to any one of the preceding claims,
**characterized in that**
the temperature control device has a heating device comprising a heater and a heating heat exchanger in the space.

13. The temperature chamber according to any one of the preceding claims,
**characterized in that**
the expansion element (15) and/or the control element (25, 27, 32) has a throttle element and a magnetic valve, refrigerant being meterable via the throttle element and the magnetic valve.

14. A method for conditioning air in a temperature-insulated space of a temperature chamber, in particular a test chamber or the like, which can be closed off from the surroundings and which serves to receive test material, a temperature in a temperature range of -50 °C to + 180 °C being established within the space by means of a cooling device (28, 30) of a temperature control device of the temperature chamber comprising a cooling circuit (11, 33) with a refrigerant, a heat exchanger (12), a compressor (13), a condenser (14) and an expansion element (15),
**characterized in that**
a jet device (20) is connected to a low-pressure side (18) of the cooling circuit downstream of the heat exchanger and upstream of the compressor, the refrigerant being supplied to the jet device as a driving fluid from a high-pressure side (17) of the cooling circuit via a first bypass (22) connected to the high-pressure side downstream of the compressor, the first bypass being connected to the high-pressure side of the cooling circuit upstream of the condenser, a second bypass (29) having at least one second control element (25) being formed in the cooling circuit (11, 33), the second bypass being connected to the cooling circuit upstream of the expansion element and downstream of the condenser and bypassing the expansion element, refrigerant being metered via the second control element in such a manner that a suction gas temperature and/or a suction gas pressure of the refrigerant on the low-pressure side of the cooling circuit is controlled upstream of the compressor, the second bypass being connected to the first bypass.

15. The method according to claim 14,
**characterized in that**
the driving fluid is introduced into a mixing chamber of the jet device (20) in the flow direction of the cooling circuit (11, 33) via a drive nozzle of the jet device, said drive nozzle being connected to the first bypass (22), the refrigerant being aspirated into the mixing chamber as a suction fluid upstream of the jet device and being ejected from the mixing chamber downstream of the jet device at a higher pressure than that of the suction fluid.

## Revendications

1. Chambre de régulation de température pour conditionner l'air, notamment une chambre d'essai ou quelque chose semblable, la chambre de régulation de température comprenant un espace isolé thermiquement qui peut être fermé par rapport à un environnement et qui sert à recevoir de la matière d'essai et un dispositif de régulation de température pour réguler la température de l'espace, le dispositif de régulation de température permettant d'établir une température dans une plage de températures de -50 °C à +180 °C dans l'espace, le dispositif de régulation de température ayant un dispositif de refroidissement (28, 30) avec un circuit de refroidissement (11, 33) avec un réfrigérant, un échangeur de chaleur (12), un compresseur (13), un condensateur (14) et un organe de détente (15), une première dérivation (22) étant reliée à un côté de haute pression (17) du circuit de refroidissement en aval du compresseur,
**caractérisée en ce**
**qu'**un dispositif de jet (20) est relié à un côté de basse pression (18) du circuit de refroidissement en aval de l'échangeur de chaleur et en amont du compresseur, le dispositif de jet pouvant être alimenté en réfrigérant comme fluide d'entraînement du côté de haute pression par la première dérivation, la première dérivation étant reliée au côté de haute pression du circuit de refroidissement en amont du condensateur, une deuxième dérivation (29) ayant au moins un deuxième organe de réglage (25) étant formée dans le circuit de refroidissement (11, 33), la deuxième dérivation étant reliée au circuit de refroidissement en amont de l'organe de détente et en aval du condensateur et contournant l'organe de détente, du réfrigérant pouvant être dosé par le deuxième organe de réglage de telle manière qu'une température de gaz d'aspiration et/ou une pression de gaz d'aspiration du réfrigérant sur le côté de basse pression du circuit de refroidissement peut être réglée en amont du compresseur, la deuxième dérivation étant reliée à la première dérivation.

2. Chambre de régulation de température selon la revendication 1, **caractérisée en ce que**
le dispositif de jet (20) a une buse d'entraînement, qui est reliée à la première dérivation (22), et une chambre de mélange, le fluide d'entraînement pouvant être introduit dans la chambre de mélange dans la direction d'écoulement du circuit de refroidissement (11, 33) par la buse d'entraînement, la chambre de mélange formant un tronçon de conduit du circuit de refroidissement du côté de basse pression (18).

3. Chambre de régulation de température selon la revendication 1 ou 2, **caractérisée en ce que**
la première dérivation (22) est munie d'au moins un premier organe de réglage (27).

4. Chambre de régulation de température selon l'une quelconque des revendications précédentes,
**caractérisée en ce**
**qu'**une autre dérivation (31) ayant au moins un autre organe de réglage (32) est formée dans le circuit de refroidissement (33), l'autre dérivation étant reliée au circuit de refroidissement en amont du dispositif de jet (20) et en aval de l'échangeur de chaleur (12) et en amont du compresseur (13) et en aval du dispositif de jet et contournant le dispositif de jet.

5. Chambre de régulation de température selon l'une quelconque des revendications précédentes,
**caractérisée en ce que**
le circuit de refroidissement a un échangeur de chaleur interne, l'échangeur de chaleur interne étant relié au côté de haute pression (17) du circuit de refroidissement en amont de l'organe de détente (15) et en aval du condensateur (14) et au côté de basse pression (18) du circuit de refroidissement en amont du compresseur (13) et en aval de l'échangeur de chaleur (12), le réfrigérant du côté de haute pression pouvant être refroidi par le réfrigérant du côté de basse pression au moyen de l'échangeur de chaleur interne.

6. Chambre de régulation de température selon la revendication 5, **caractérisée en ce que**
l'échangeur de chaleur interne est relié au côté de basse pression (18) en amont du compresseur (13) et en aval du dispositif de jet (20).

7. Chambre de régulation de température selon la revendication 5, **caractérisée en ce que**
l'échangeur de chaleur interne est relié au côté de basse pression (18) en amont du dispositif de jet (20) et en aval de l'échangeur de chaleur (12).

8. Chambre de régulation de température selon l'une quelconque des revendications précédentes,
**caractérisée en ce**
**qu'**une température dans une plage de températures de -70 °C à + 180 °C, de préférence de -85 °C à +200 °C, peut être établie dans l'espace au moyen du dispositif de régulation de température.

9. Chambre de régulation de température selon l'une quelconque des revendications précédentes,
**caractérisée en ce que**
l'échangeur de chaleur (12) est disposé dans l'espace

10. Chambre de régulation de température selon l'une quelconque des revendications 1 à 8,
**caractérisée en ce que**
l'échangeur de chaleur (12) forme un échangeur de chaleur en cascade pour un autre circuit de refroidissement du dispositif de refroidissement (28, 30).

11. Chambre de régulation de température selon l'une quelconque des revendications précédentes,
**caractérisée en ce que**
le condensateur (14) est configuré comme échangeur de chaleur en cascade d'un autre circuit de refroidissement du dispositif de refroidissement (28, 30).

12. Chambre de régulation de température selon l'une quelconque des revendications précédentes,
**caractérisée en ce que**
le dispositif de régulation de température a un dispositif de chauffage comprenant un chauffage et un échangeur de chaleur chauffant dans l'espace.

13. Chambre de régulation de température selon l'une quelconque des revendications précédentes,
**caractérisée en ce que**
l'organe de détente (15) et/ou l'organe de réglage (25, 27, 32) a un organe d'étranglement et une vanne magnétique, du réfrigérant pouvant être dosé par l'organe d'étranglement et la vanne magnétique.

14. Procédé de conditionnement d'air dans un espace d'une chambre de régulation de température, notamment une chambre d'essai ou quelque chose semblable, l'espace étant isolé thermiquement et pouvant être fermé par rapport à un environnement et servant à recevoir de la matière d'essai, une température dans une plage de températures de -50 °C à +180 °C étant établie dans l'espace au moyen d'un dispositif de refroidissement (28, 30) d'un dispositif de régulation de température de la chambre de régulation de température avec un circuit de refroidissement (11, 33) avec un réfrigérant, un échangeur de chaleur (12), un compresseur (13), un condensateur (14) et un organe de détente (15),
**caractérisé en ce**
**qu'**un dispositif de jet (20) est relié à un côté de basse pression (18) du circuit de refroidissement en aval de l'échangeur de chaleur et en amont du compresseur, le dispositif de jet étant alimenté en réfrigérant comme fluide d'entraînement du côté de haute pression du circuit de refroidissement par une première dérivation reliée au côté de haute pression en amont du condensateur, une deuxième dérivation (29) ayant au moins un deuxième organe de réglage (25) étant formée dans le circuit de refroidissement (11, 33), la deuxième dérivation étant reliée au circuit de refroidissement en amont de l'organe de détente et en aval du condensateur et contournant l'organe de détente, du réfrigérant étant dosé par le deuxième organe de réglage de telle manière qu'une température de gaz d'aspiration et/ou une pression de gaz d'aspiration du réfrigérant sur le côté de basse pression du circuit de refroidissement est réglée en amont du compresseur, la deuxième dérivation étant reliée à la première dérivation.

15. Procédé selon la revendication 14,
**caractérisé en ce que**
le fluide d'entraînement est introduit dans une chambre de mélange du dispositif de jet (20) dans la direction d'écoulement du circuit de refroidissement (11, 33) par une buse d'entraînement du dispositif de jet, la buse d'entraînement étant reliée à la première dérivation (22), le réfrigérant étant aspiré dans la chambre de mélange comme fluide d'aspiration en amont du dispositif de jet et étant éjecté de la chambre de mélange en aval du dispositif de jet à une pression supérieure à celle du fluide d'aspiration.
